# EUROPEAN PATENT APPLICATION

(11) **EP 1 721 721 A1**
(43) Date of publication of application: **15.11.2006**
(21) Application number: 05010533.7
(22) Date of filing: 13.05.2005
(51) Int. Cl.: B29C 45/14, F16F 1/10, B29C 70/76

(54) **Injection molding technique for embedding volute flexible material into reel**

(71) Applicant: Taiwan Mindcatcher, Inc., Sanchong City Taipei County 241 (TW)
(72) Inventor: Lin, Chao-Jen, Taipei 106 (TW); Huang, Kuo-Tsai, Sanchong City, Taipei County 241 (TW)
(74) Representative: Zeitler, Giselher

(57) **Abstract**

The present invention provides an injection molding technique for embedding a volute flexible material (120) into reel (110) in order to produce a rotation assembly (100). At first, a volute component (120), a first mold (210), and a second mold (220) are provided. Next, the volute component is inserted into a corresponding volute fissure (228) of the second mold (220). In a following step, these two molds (210,220) are combined together in order to align a first end cavity (212) of the first mold (210) with a second cavity (222) of the second mold (220). Therefore, a reel component (110) of the rotation assembly (100) is blocked by injecting material into the space composed by the first end cavity and the second cavity through an injection hole (230). At last, the rotation assembly (100) is retrieved by decomposition of the first and second molds (210,220).

## Description

### BACKGROUND OF THE INVENTION

### 1. Field of the Invention

The present invention generally relates to injection molding, and more particularly to an injection molding method for embedding volute flexible material into reel.

### 2. Description of the Prior Art

Currently, consumer electronics are becoming lighter and smaller for portable conveniently. In this regards, folding design is a popular mechanism of industrial product design. Conventional folding design usually relies on a volute flexible material embedded into an injection molded reel for providing rotational force in order to unfold without electric powered motor driving. However, following the trend of product design miniaturization, the structural strength and reliability of the design is getting weaker in proportion of the miniaturized structural size. It leads to that weaken structural strength cannot meet the requirement.

The conventional combination method of the reel and the volute flexible material is to join these two separate components together. For example, one end of a spiral spring is putted into a flute or a bulge of the reel, and another end of the spiral spring is fixed in the folded component. It is quite difficult to have this design on miniaturized products. The combination of these two components gets loosen and broken quite easily. Therefore materials with higher structural strength are required. However, the main reason of loose and break of this design is the over-stress of the contact points between these two components. Adopting materials with higher structural strength is not only restricted by the increasing cost and the trend of miniaturization but also in-effective in solving the main reason.

The drawback of the mentioned combination method is not solved to date; it is especially difficult to embed a volute flexible component into an injection molded reel. The difficulty resides at that the conventional embedding method cannot overcome the twist force and flexibility of the volute flexible component. The volute flexible component may be embedded in prior to be heat processed for shaping. However, the heat process would involve two different materials with different melting points, such as plastic of the reel and metal of the volute flexible component. Hence, it is in-practical to embed the volute flexible component before injection molding.

Accordingly, there exists a need for an injection molding method for embedding a volute flexible material to solve the mentioned drawback.

### SUMMARY OF THE INVENTION

Therefore, in accordance with the previous summary, objects, features and advantages of the present disclosure will become apparent to one skilled in the art from the subsequent description and the appended claims taken in conjunction with the accompanying drawings.

One objective of the present invention is to disclose a method for producing a rotation assembly. The rotation assembly provided by the present invention comprises an injection molded reel component and a volute component. The volute component comprises a spiral part and a embed part embedded into the reel component. The reel component comprises a middle section embedding said embed part, a first end, and a second end. In this regards, the shape of a first cavity of the first mold is correspondent to the first end. The second mold comprises a second cavity aligned with the first cavity and a third cavity; and the shape of said second cavity is correspondent to the middle section and the second end. Hence a hollow columnar mold lay between the second cavity and third cavity further comprises a volute fissure for the volute component. The spiral shape of said volute fissure is correspondent to said volute component. Next, putting the volute component into the volute fissure. In the following step, combining the first mold and said second mold by aligning the first cavity and the second cavity in prior to injecting material to fulfill the space composed by said first cavity and said second cavity through an injection hole. At last, separating said first mold and said second mold for retrieving said rotation assembly.

Another objective of the present invention is to disclose a rotation assembly. The rotation assembly provided by the present invention comprises an injection molded reel component and a volute component. The volute component comprises a spiral part and a embed part embedded into the reel component. The reel component comprises a middle section embedding said embed part, a first end, and a second end. The spiral part comprises at least one cut-away part near the embed part such that at least one hammer part of the embed part is formed near the cut-away part, and the embed part further comprise a plurality of holes.

When the embed part is embedded into the reel component, the outer force applied on the volute component would be transferred partially to the reel component through the hammer part. Hence the cohesion between the volute component and the reel component would be reinforced by the mechanism. Therefore the rotation assembly 100 produced by following the method in accordance with the present invention could overcome the drawback of conventional combination design.

### BRIEF DESCRIPTION OF THE DRAWINGS

The accompanying drawings incorporated in and forming a part of the specification illustrate several aspects of the present invention, and together with the description serve to explain the principles of the disclosure. In the drawings:

Fig. 1 is a diagram illustrates a rotation assembly of an embodiment in accordance with the present invention;

Fig 1B is a diagram illustrates the volute component shown in the Fig. 1A;

Fig. 2 is a diagram depicts an injection mold of an embodiment in accordance with the present invention; and

Fig. 3 is a flowchart diagram shows a method for embedding a volute flexible material into a reel component in accordance with the present invention.

### DETAILED DESCRIPTION OF THE PREFERRED EMBODIMENTS

The present disclosure can be described by the embodiments given below. It is understood, however, that the embodiments below are not necessarily limitations to the present disclosure, but are used to a typical implementation of the invention.

Having summarized various aspects of the present invention, reference will now be made in detail to the description of the invention as illustrated in the drawings. While the invention will be described in connection with these drawings, there is no intent to limit it to the embodiment or embodiments disclosed therein. On the contrary the intent is to cover all alternatives, modifications and equivalents included within the spirit and scope of the invention as defined by the appended claims.

It is noted that the drawings presents herein have been provided to illustrate certain features and aspects of embodiments of the invention. It will be appreciated from the description provided herein that a variety of alternative embodiments and implementations may be realized, consistent with the scope and spirit of the present invention.

It is also noted that the drawings presents herein are not consistent with the same scale. Some scales of some components are not proportional to the scales of other components in order to provide comprehensive descriptions and emphasizes to this present invention.

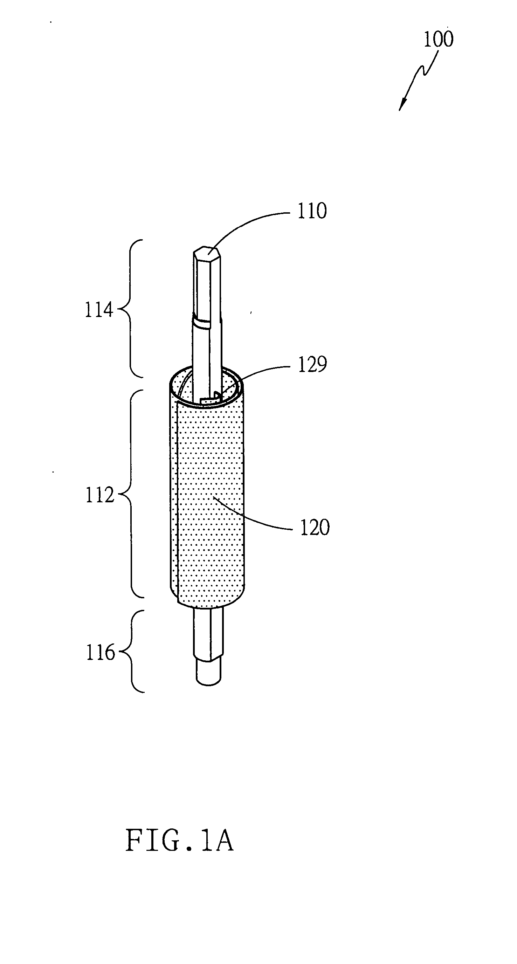

Please refer to Fig. 1A, which shows a rotation assembly 100 of an embodiment in accordance with the present invention. In this regards, the rotation assembly 100 comprises an injection molded reel component 110 and at least one volute component 120. The volute component 120 could be made by flexible material, such as metal, which could maintain original shape after being squeezed, expanded, and/or compressed. Please notify that the present invention does not restrict the size, length, and revolution of the volute component 120 as well as the size, length, and shape of the reel component 110. In this embodiment, the volute component 120 is embedded into the reel component 110 by applying the method disclosed by the present invention. More detailed, the volute component 120 is embedded into a middle section 112 of the reel component 110. For convenience, two ends of the reel component 110 are named as a first end 114 and a second end 116.

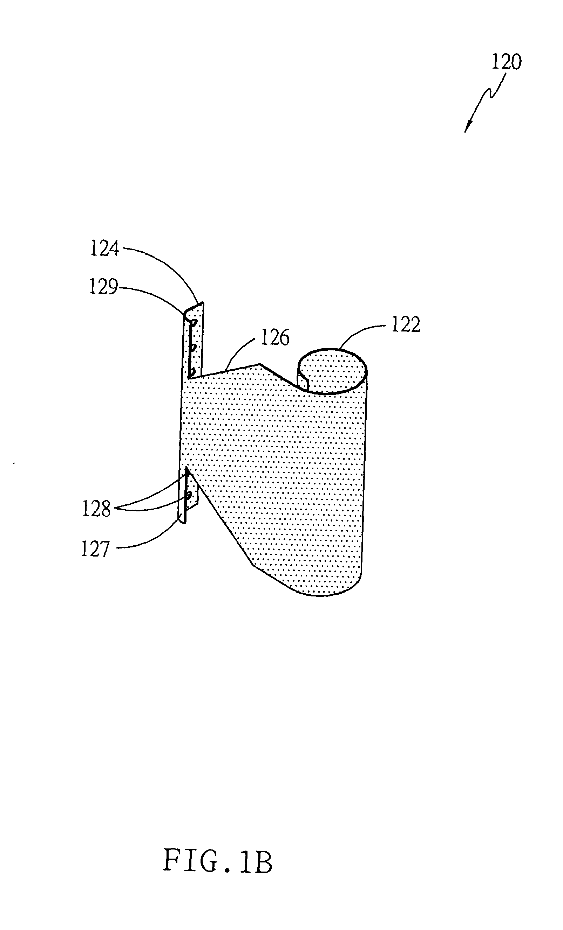

Please refer to Fig. 1B, which shows the volute component 120 shown in the Fig. 1A. The volute component 120 comprises a spiral part 122 and an embed part 124. In this regards, at least a cut-away part 126 of the spiral part 122 is cut near the embed part 124. Therefore at least one hammer part 127 of the embed part 124 is formed in apposition with the cut-away part 126. When the embed part 124 is embedded into the reel component 110, the outer force applied on the volute component 120 would be transferred partially to the reel component 110 through the hammer part 127. Hence the cohesion between the volute component 120 and the reel component 110 would be reinforced by the mechanism. Please notify that the present invention does not restrict the shape and size of the hammer part 127.

As shown in the Fig. 1B, the embed part 124 could further comprises a plurality of holes 128. After been injection molded, the plurality of holes 128 would be filled with the material of the reel component 110. When the embed part 124 is embedded into the reel component 110, the cohesion between the volute component 120 and the reel component 110 would be reinforced by the material in the plurality of holes 128. Please notify that the present invention does not restrict the size, number, and location of the plurality of holes 128.

As shown in the Fig. 1A, the volute component 120 could further comprise a turning angle 129, which is far larger than the rest part of the spiral part 122. In one example, the turning angle 129 is around perpendicular. The sustainable structural force level of the rotation assembly 100 could be reinforced by the turning angle 129. Without it, the stress force absorbed by the turning angle 129 would be distributed into the conjunction between the reel component 110 and the volute component 120, which is the most un-substantial weakness of the rotation assembly 100. The additional stress could cause de-forming of the reel component 110 and/or the volute component 120, which would decrease the sustainable stress of the rotation assembly 100 furthermore.

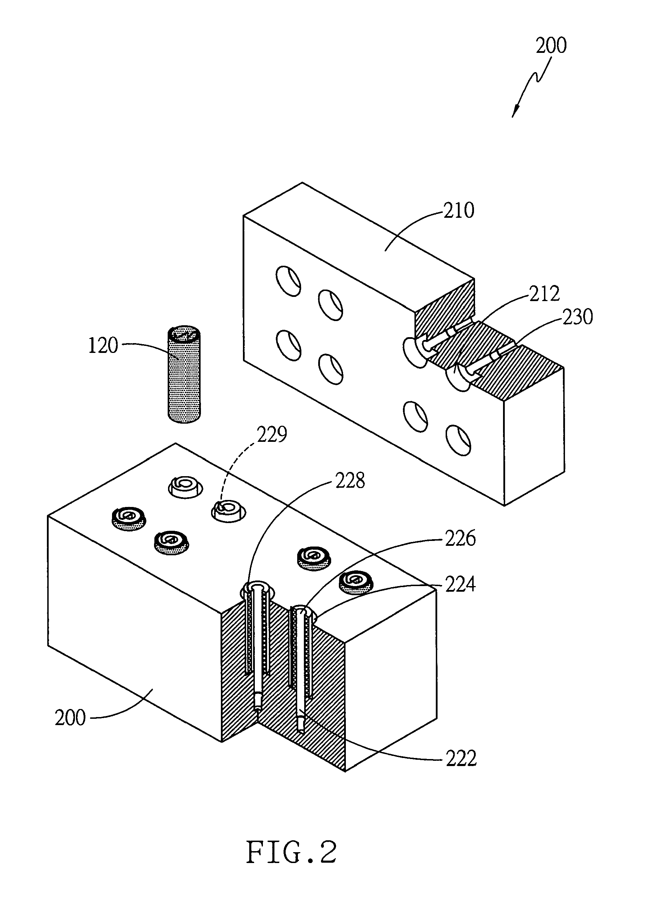

Please refer to Fig. 2, which shows an injection mold 200 of an embodiment in accordance with the present invention. The injection mold 200 comprises a first mold 210 and a second mold 220. In this regards, the first mold 210 comprises a first mold cavity 212 which is correspondent to the first end 114. Besides, the second mold 220 comprises a second mold cavity 222 which is correspondent to the middle section 112 and the second end 116.

As shown in Fig. 2, the second mold 220 could comprise a third cavity 224. The depth of the third cavity 224 is as the same as the length of the middle section 112. A hollow columnar mold 226 is laid between the second cavity 222 and the third cavity 224. Moreover, the hollow columnar mold 226 could further comprise a volute fissure 228 which is correspondent to the volute component 120. More detailed, the width of the volute fissure 228 is correspondent to the thickness of the volute component 120; the depth of the volute fissure 228 is correspondent to the length of the middle section 112; and the spiral shape of the volute fissure 228 is correspondent to the spiral shape of the volute component 120. Besides, the spiral part 122 of the volute component 120 could be placed into the third cavity 224. In one example of the embodiment, the volute fissure 228 could comprise a turning angle fissure 229 correspondent to the turning angle 129 of the volute component 120.

In one example of the embodiment, an injection hole 230 of the injection mold 200 is located at one end of the first cavity 212; in another example, the injection hold 230 of the injection mold 200 is located at one end of the second cavity 222.

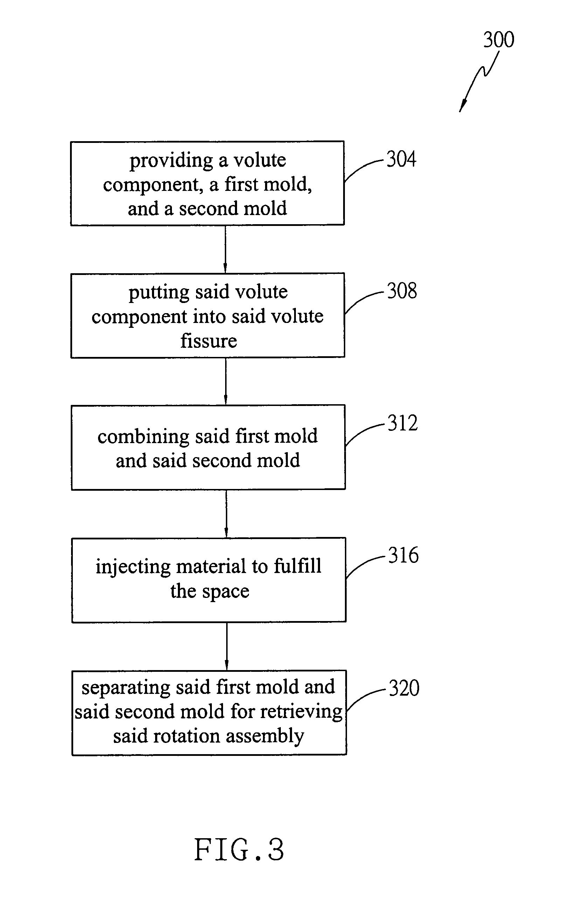

Please refer to Fig. 3, which is a flowchart diagram shows a method 300 for embedding a volute flexible material into a reel component in accordance with the present invention. At first, the volute component 120, the first mold 210, and the second mold 220 are provided in step 304. Next, processing step 308, the volute component 120 is inserted into the corresponding volute fissure 228 of the second mold 220. In step 312, the two molds 210 and 220 are combined such that the first cavity 212 is aligned with the second cavity 222. After that, by injecting material into the space joined by the first cavity 212 and the second cavity 222 in injection step 316, the reel component 110 is blocked. At the last step 320, the two molds 210 and 220 are separated for retrieving the rotation assembly 100 shown in the Fig. 1A.

When the embed part 124 is embedded into the reel component 110, the outer force applied on the volute component 120 would be transferred partially to the reel component 110 through the hammer part 127. Hence the cohesion between the volute component 120 and the reel component 110 would be reinforced by the mechanism. Therefore the rotation assembly 100 produced by following the method in accordance with the present invention could overcome the drawback of conventional combination design.

The foregoing description is not intended to be exhaustive or to limit the invention to the precise forms disclosed. Obvious modifications or variations are possible in light of the above teachings. In this regard, the embodiment or embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the inventions as determined by the appended claims when interpreted in accordance with the breath to which they are fairly and legally entitled.

It is understood that several modifications, changes, and substitutions are intended in the foregoing disclosure and in some instances some features of the invention will be employed without a corresponding use of other features. Accordingly, it is appropriate that the appended claims be construed broadly and in a manner consistent with the scope of the invention.

## Claims

1. A method for producing a rotation assembly, comprising:
providing a volute component, a first mold, and a second mold, wherein said rotation assembly comprises an injection molded reel component and said volute component, said volute component comprises a spiral part and a embed part embedded into said reel component, said reel component comprises a middle section embedding said embed part, a first end, and a second end, shape of a first cavity of said first mold is correspondent to said first end, said second mold comprises a second cavity aligned with said first cavity and a third cavity, shape of said second cavity is correspondent to said middle section and said second end, a hollow columnar mold laid between said second cavity and said third cavity further comprise a volute fissure for said volute component, spiral shape of said volute fissure is correspondent to said volute component;
putting said volute component into said volute fissure;
combining said first mold and said second mold by aligning said first cavity and said second cavity;
injecting material to fulfill the space composed by said first cavity and said second cavity through an injection hole; and
separating said first mold and said second mold for retrieving said rotation assembly.

2. A method of claim 1, wherein said spiral part comprises at least one cut-away part near said embed part such that at least one hammer part of said embed part is formed near said cut-away part, and said embed part further comprise a plurality of holes.

3. A method of claim 1, wherein the location of said injection hole is chosen from one of followings:
said first cavity; and
said second cavity.

4. A method of claim 1, wherein the material of said volute component is chosen from one of followings:
flexible material; and
metal.

5. A method of claim 1, wherein said spiral part of said volute component further comprises a turning angle and said volute fissure further comprises a turning angle fissure correspondent to said turning angle, both said turning angle and said turning angle fissure are around perpendicular.

6. A rotation assembly, comprising:
an injection molded reel component; and
a volute component surrounding said reel component, wherein said volute component comprises a spiral part and an embed part embedded into said reel component.

7. A rotation assembly of claim 6, wherein said spiral part comprises at least one cut-away part near said embed part such that at least one hammer part of said embed part is formed near said cut-away part, and said embed part further comprise a plurality of holes.

8. A rotation assembly of claim 6, wherein the material of said volute component is chosen from one of followings:
flexible material; and
metal.

9. A rotation assembly of claim 6, wherein said spiral part of said volute component further comprises a turning angle.

10. A rotation assembly of claim 9, said turning angle is around perpendicular.

## Amended claims

### Amended claims in accordance with Rule 86(2) EPC.

**1.** Rotation assembly, comprising:
an injection molded reel component (110) and
a volute component (120) surrounding said reel component (110), wherein said volute component (120) comprises a spiral part (122) and an embed part (124) embedded into said reel component (110),
**characterized in that**
said spiral part (122) comprises at least one cut-away part (126) near said embed part (124) such that at least one hammer part (127) of said embed part (124) is formed near said cut-away part (126), and said embed part (124) further comprises a plurality of holes (128).

**2.** Rotation assembly according to claim 1, **characterized in that** the volute component (120) is made by flexible material, such as metal.

**3.** Rotation assembly according to claim 1 or 2, **characterized in that** said spiral part (122) of said volute component (120) further comprises a turning angle (129).

**4.** Rotation assembly according to claim 3, **characterized in that** said turning angle (129) is around perpendicular.

**5.** Method for producing a rotation assembly (100) according to one of the foregoing claims, **characterized by** the following steps:
- providing a volute component (120) comprising a spiral part (122) and an embed part (124);
- providing a first mold (210) having a first cavity (212), the shape of the first cavity (212) corresponding to a first end (114) of an injection molded reel component (110);
- providing a second mold (220) having a second cavity (222) aligned with the first cavity (212), and a third cavity (224), the shape of the second cavity (222) corresponding to a middle section (112) embedding said embed part (124), and to a second end (116) of said reel component (110), the second mold (220) further having a hollow columnar mold (226) arranged between the second and the third cavity (222, 224), said columnar mold (226) comprising a volute fissure (228) for said volute component (120), the spiral shape of said volute fissure (228) corresponding to said volute component (120);
- putting said volute component (120) into said volute fissure (228);
- combining said first mold (210) and said second mold (220) by aligning said first cavity (212) and said second cavity (222);
- injecting material to fulfill the space composed by said first cavity (212) and said second cavity (222) through an injection hole (230); and
- separating said first mold (210) and said second mold (220) for retrieving said rotation assembly (100) comprising said reel component (110) and said volute component (120).

**6.** Method according to claim 5, **characterized in that** said material is injected through said injection hole (230) located at one end of the first cavity (212) or at one end of the second cavity (222).

**7.** Method according to claim 5 or 6, **characterized in that** said volute component (120) is put into said volute fissure (228) by inserting a turning angle (129) of the spiral part (122) of said volute component (120) into a turning angle fissure (229) of said volute fissure (228) correspondent to the turning angle (129) of said volute component (120).
